# EUROPEAN PATENT APPLICATION

(11) **EP 4 030 395 A1**
(43) Date of publication of application: **20.07.2022**
(21) Application number: 22150951.6
(22) Date of filing: 11.01.2022
(51) Int. Cl.: G06V 40/10, G06V 10/774

(54) **METHOD AND SYSTEM FOR MANAGING LIVESTOCK**

(30) Priority: 13.01.2021 IN 202141001657
(71) Applicant: Stellapps Technologies Private Limited, 560068 Bangalore (IN)
(72) Inventor: GAJANANA, Shiroor Ravishankar, 560098 Bangalore (IN); MUKUNDAN, Ranjith Karnamkot, 560075 Bengaluru (IN); PRAJAPAT, Umesh, 322201 Sawai Madhopur (IN)
(74) Representative: AWA Denmark A/S

(57) **Abstract**

Embodiments of a method of registration of a newly onboard livestock are disclosed. In an embodiment, the method includes creating, by a computing device, a unique identifier (ID) for the newly onboard livestock in such a manner that there exists a singularity between the unique identifier and the corresponding newly onboard livestock.

## Description

### FIELD OF THE INVENTION

The disclosure relates to livestock management in general. In particular, the disclosure relates to methods and systems for registration and identification of livestock.

### BACKGROUND OF THE INVENTION

In general, livestock management has mostly been understood as a manual activity for a long time especially in the rearing and management of cattle. With the advent of technology, some of the aspects of livestock management have been automated using tools, automations, etc. For instance, automated milking machines, milk gradation systems, milk packing systems, cattle tracking systems, inventory management etc. are widely used by dairy farms. However, such systems and tools work in isolation or without any communication with each other. In addition, the systems do not connect or communicate with remote systems efficiently and/or in a seamless manner. Due to unorganized nature of these systems, a lot of data associated with livestock remains uncaptured and/or unused. Further, data processing and analytics have significantly advanced in terms of computing efficiency and accuracy. However, no concerted effort has been made in automating livestock management and integrating numerous isolated systems/processes to work in a cohesive manner. In certain cases, due to mismanaged livestock, a lot of loss to both life and property is experienced. For instance, there have been increasing number of cases where fraudulent insurance claims have been made by livestock owners. Insurance companies and financial institutions do not have sophisticated systems and processes to ascertain authenticity of individual claims.

### SUMMARY OF THE INVENTION

Systems and methods are disclosed that implement an effective and feasible approach to address at least the above highlighted challenges and disadvantages. Existing systems and methods for registration of livestock are not reliable and do not provide for a robust infrastructure for stakeholders to accurately ascertain the identity of livestock. The disclosed system and methods implement AI-based models for livestock management. Particularly, the disclosed systems and methods implement AI-based models for registration of a newly onboard livestock.

Embodiments of a method of registration of a newly onboard livestock are disclosed. In an embodiment, the method includes creating, by a computing device, a unique identifier (ID) for the newly onboard livestock in such a manner that there exists a singularity between the unique identifier and the corresponding newly onboard livestock. In an embodiment, creating the unique ID further includes using, by the computing device, an image/video capturing device to capture a plurality of images/videos of the newly onboard livestock. In an embodiment, creating the unique ID further includes using, by the computing device, an artificial intelligence module configured to dynamically extract one or more features associated with the newly onboard livestock from the plurality of images/videos of the newly onboard livestock. In an embodiment, the one or more features include data corresponding to a biometric data, a muzzle print, and/or at least one body part of the newly onboard livestock. In an embodiment, creating the unique ID further includes selecting, by the computing device, one or more images/videos based on similarity of images/videos amongst the plurality of images/videos of the newly onboard livestock. In an embodiment, the selecting further includes computing a similarity score for each of the plurality of images/videos of the newly onboard livestock with respect to each other. In an embodiment, creating the unique ID further includes performing, by the computing device, a de-duplication process on the selected images/videos of the newly onboard livestock to determine a unique image/video associated with the newly onboard livestock. In an embodiment, creating the unique ID further includes using, by the computing device, a patch/combination of a unique biometric-based ID and a unique body-based ID of the newly onboard livestock.

In an embodiment, the method further includes mapping the unique ID of the newly onboard livestock to a unique image/video and demographic data of the newly onboard livestock. In an embodiment, the method further includes encrypting, by the computing device, the unique ID of the newly onboard livestock. In an embodiment, the method further includes using, by the computing device, an artificial intelligence model to analyze the step of creating the unique ID of the newly onboard livestock. In an embodiment, creating the unique ID further includes performing, by the computing device, a de-duplication process on the plurality of images/videos by matching the one or more features of the newly onboard livestock with one or more features of pre-existing livestock stored in a database. In an embodiment, creating the unique ID further includes triggering, by the computing device, a recapture of the plurality of images/videos of the newly onboard livestock from a different elevation angle and/or a different viewpoint if a positive match is found in the database and performing, by the computing device, the de-duplication process. In an embodiment, creating the unique ID further includes updating, by the computing device, an existing unique ID with the recaptured plurality of images/videos if a positive match is again found in the database. In an embodiment, creating the unique ID further includes generating and storing, by the computing device, the unique ID in the database if a match is not found. In an embodiment, creating the unique ID further includes iteratively performing, by the computing device, the de-duplication process on the plurality of images/videos. In an embodiment, creating the unique ID further includes selecting, by the computing device, one or more images/videos from the plurality of images/videos and performing, by the computing device, the de-duplication process in an iterative manner on the selected one or more images/videos.

Computing devices and computer readable media having instructions implementing the various technologies described herein are also disclosed. Example computer readable media may comprise tangible, non-transitory computer readable storage media having computer executable instructions executable by a processor, the instructions that, when executed by the processor, cause the processor to carry out any combination of the various methods and approaches provided herein. Example computing devices may include a server or a client device comprising a processor, a memory, a client application and/or a network service configured to carry out the methods described herein.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE FIGURES

Fig. 1 shows an example computing environment 100 for livestock management in accordance with an embodiment.
Fig. 2 shows an example of a client computing device 200 for use in livestock management ecosystem in accordance with an embodiment.
Fig. 3 shows an example of server computing device 300 for use in livestock management ecosystem in accordance with an embodiment.
Figs. 4a and 4b show an example muzzle-based registration process 400 for livestock in a livestock management ecosystem in accordance with an embodiment.
Fig. 5a and 5b show an example body-based registration process 500 for livestock in a livestock management ecosystem in accordance with an embodiment.
Fig. 6 shows an example identification process 600 for livestock in a livestock management ecosystem in accordance with an embodiment.
Fig. 7 shows an exemplary livestock management ecosystem 700 in accordance with an embodiment.

### DETAILED DESCRIPTION OF THE FIGURES

The following detailed description is presented to enable any person skilled in the art to make and use the invention. For purposes of explanation, specific details are set forth to provide a thorough understanding of the present invention. However, it will be apparent to one skilled in the art that these specific details are not required to practice the invention. Descriptions of specific applications are provided only as representative examples. Various modifications to the preferred embodiments will be readily apparent to one with high skilled in the art, and the general principles defined herein may be applied to other embodiments and applications without departing from the scope of the invention. The present invention is not intended to be limited to the embodiments shown but is to be accorded the widest possible scope consistent with the principles and features disclosed herein.

For the purposes of ongoing description, "livestock" refers to domesticated animals raised in an agricultural farm setting to produce commodities such as meat, eggs, milk, fur, leather, and wool. Non-limiting examples of livestock include cattle, goats, horses, pork, veal, beef, and lamb. Livestock rearing practices have largely shifted to intensive animal farming, also referred to as "factory farming". There are many advantages of intensive animal farming such as, increased yield of various commercial outputs/produce, cost control, optimum utilization of farm resources amongst other things. However, due to lack of proper infrastructure, automation, integrated systems, and reduced farming efficiency, a significant decline of livestock is foreseen for at least some animals (e.g. cattle) especially in certain countries in the next 5-10 years.

The problem of non-integrated systems and practices is exacerbated in developing nations where a large part of the country still does not have a stable internet connectivity. Lack of awareness of latest technologies, huge costs associated with installing modern day equipment, fear of transition to modernized tools, perception of loss of income due to increased mechanization have all led to declining interest and risk-taking ability in current and potential investors. Further, insurance companies and banks have been receiving increasing number of false/fraudulent claims and they lack proper mechanisms and systems to accurately authenticate the validity of claims. For instance, duplicate entries or multiple entries for the same livestock lead to inaccurate results. One of the primary reasons may be non-singularity of authentication data with respect to individual livestock. In other words, there is a well-felt need for a holistic solution for at least the above mentioned issues.

The current disclosure proposes an effective and feasible approach to address at least the above mentioned issues. The proposed approach includes developing and providing a livestock management ecosystem that implements some of the latest technologies available in Artificial Intelligence, data science, data analytics and complex data processing. There is a lot of data available in a farm setting that remains uncaptured or unused due to absence of an ecosystem that can benefit some or all its stakeholders. In an exemplary embodiment, the data that can be captured from a farm setting include identification details of livestock, images of different body parts of livestock, health details of livestock since birth, historical data for the livestock treatment, medical history of ailments of livestock (if any), produce from individual livestock, details regarding the breed/ancestors of the livestock, nutrition consumption details consumed by the livestock, data associated with the quality of produce, data associated with insurance of the livestock, data associated with the sale/purchase of the livestock including the details of the ownership history, supply chain details, warehousing details of products from livestock, packaging details of the products from livestock, price details of the produce from livestock, vital statistics and body characteristics (height, weight, length, color etc.) of the livestock and the like.

For the purposes of ongoing description, the stakeholders for the proposed ecosystem can include farmers, agriculturists, farm owners, milkman, wholesale distributors, industrialists, FMCG corporations, financial institutions, insurance companies, veterinary clinics, companies developing herd management solutions, farm management companies, digital farm advisory companies, and end users/consumers. Existing systems and methods fail to optimally bring together all these stakeholders on a single platform where respective interests of all the stakeholders can be served in a communal fashion. Disclosed livestock management ecosystem uniquely integrates various systems, computing devices, networks, application-level software elements (frontend and backend), databases and other such subsystems by overcoming numerous challenges posed by a plurality of complexities. The plurality of complexities includes, non-uniform formats/processes for data capture, inconsistent data storage standards/processes, non-uniform diagnostic procedures for diseases/illness of livestock, broken chain(s) of data capture and storage, discontinuous data trail, non-availability of data to all the stakeholders, non-standard infrastructure for livestock management, and non-unified access to data for all the stakeholders.

Embodiments of a client computing device for registration of a newly onboard livestock are disclosed. In an embodiment, the client computing device includes a processor coupled to a memory and configured to execute one or more instructions stored in the memory. The memory includes an artificial intelligence (AI)/machine learning (ML) module configured to create a unique identifier (ID) for the newly onboard livestock in such a manner that there exists a singularity between the unique identifier and the corresponding newly onboard livestock. In an embodiment, the memory includes a livestock registration module configured to use an image/video capturing device to capture a plurality of images/videos of the newly onboard livestock. In an embodiment, the AI/ML module is further configured to dynamically extract one or more features associated with the newly onboard livestock from the plurality of images/videos of the newly onboard livestock. In an embodiment, the one or more features include data corresponding to a biometric data, a muzzle print, and/or at least one body part of the newly onboard livestock. In an embodiment, the AI/ML module is further configured to select one or more images/videos based on similarity of images/videos amongst the plurality of images/videos of the newly onboard livestock. In an embodiment, the AI/ML module is further configured to compute a similarity score for each of the plurality of images/videos of the newly onboard livestock with respect to each other. In an embodiment, the AI/ML module is further configured to perform a de-duplication process on the selected images/videos of the newly onboard livestock to determine a unique image/video associated with the newly onboard livestock. In an embodiment, the AI/ML module is further configured to generate and use a patch/combination of a unique biometric-based ID and a unique body-based ID of the newly onboard livestock to create the unique ID for the newly onboard livestock. In an embodiment, the AI/ML module is further configured to map the unique ID of the newly onboard livestock to a unique image/video and a demographic data of the newly onboard livestock. In an embodiment, the livestock registration module is further configured to trigger encryption of the unique ID of the newly onboard livestock.

In an embodiment, the AI/ML module is further configured to use an AI model to analyze the creation of the unique ID of the newly onboard livestock. In an embodiment, the AI/ML module is further configured to perform a de-duplication process on the plurality of images/videos based on a comparison of the one or more features of the newly onboard livestock with one or more features of pre-existing livestock. In an embodiment, the AI/ML module is further configured to trigger a recapture of the plurality of images/videos of the newly onboard livestock from a different elevation angle and/or a different viewpoint if a positive match is found between the one or more features of the newly onboard livestock and the one or more features of pre-existing livestock and perform the de-duplication process after every instance of recapture. In an embodiment, the AI/ML module is further configured to trigger an update of an existing unique ID with the recaptured plurality of images/videos if a positive match is again found between the one or more features of the newly onboard livestock and the one or more features of pre-existing livestock. In an embodiment, the AI/ML module is further configured to generate and store the unique ID in a database if a match is not found between the one or more features of the newly onboard livestock and the one or more features of pre-existing livestock. In an embodiment, the AI/ML module is further configured to iteratively perform the de-duplication process on the plurality of images/videos. In an embodiment, the AI/ML module is further configured to select one or more images/videos from the plurality of images/videos and perform the de-duplication process in an iterative manner on the selected one or more images/videos.

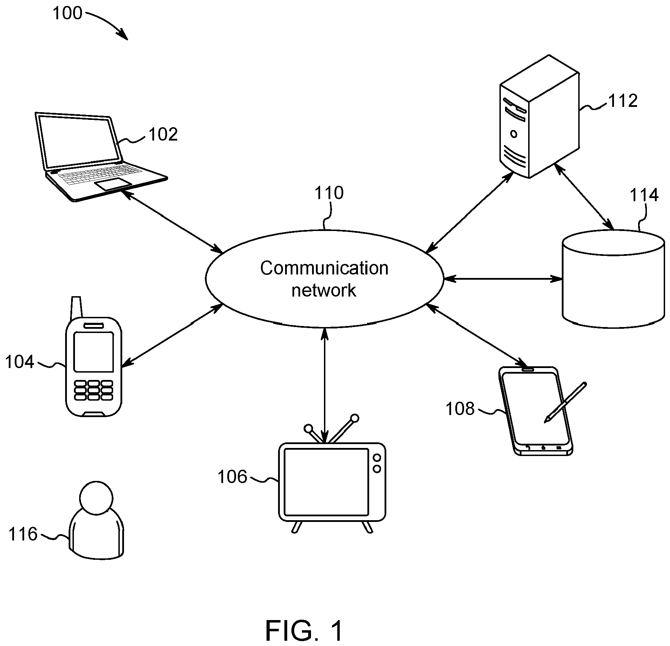

Fig. 1 shows an example computing environment 100 for livestock management in accordance with an embodiment. As shown, the computing environment 100 includes one or more client computing devices 102, 104, 106, and 108 all communicating with a computing network 110. The ecosystem includes one or more server computing device 112 and a database 114 in communication with the computing network 110. Furthermore, the computing network 110 may be configured implement different networking technologies, such as, fixed (Ethernet, fiber, xDSL, DOCSIS^{®}, USB, etc.), mobile WAN (2G, 3G, 4G, 5G, etc.), Wireless LAN (WiFi^{®}, etc.), and Wireless PAN (Bluetooth^{®}, WiGig, ZWave^{®}, ZigBee^{®}, IrDA, etc.). In an embodiment, the computing environment 100 may implement a server-client architecture. In an embodiment, the computing network 110 may correspond to a medium through which content and messages flow between various devices of the computing environment 100 (e.g., the client computing devices 102, 104, 106, 108), the server computing device 112, and the database 114. In an embodiment, the database 114 corresponds to a Postgres database (DB), or a NoSQL database. Various devices in the environment 100 can connect to the network 110 in accordance with the various wired and wireless communication protocols such as Transmission Control Protocol and Internet Protocol (TCP/IP), User Datagram Protocol (UDP), and 2G, 3G, 4G or 5G communication protocols.

The computing environment 100 represents an ecosystem for end-to-end livestock management. In an embodiment, a human operator or person 116 will interact with the one or more client computing devices in the computing environment 100 for providing inputs and consuming output from these devices. Such a human operator or person in the context of a farm environment and livestock management is referred to as "Farm Intervention Officer" (FIO) or "Farm Improvement Technician" (FIT) for the purposes of the ongoing description. In an embodiment, such a human operator may be employed with insurance companies, financial institutions, and/or farm/livestock management companies. In an embodiment, such a human operator may be entrusted with the task of processing claims filed by the livestock owners.

The proposed approach provides for a client application that is used by the farm intervention officer who is expected to visit dairy farms and perform one or more tasks. The one or more tasks include inputting details for various parameters through the user interface (UI) of the client application. Non-limiting examples of parameters include: name of the dairy, name of the farm, unique identification associated with a particular farm or "Farm ID", demographic details, geo-location/GPS of farm or livestock (latitude and longitude), age of livestock (in days, weeks, months or years), and ear tag ID of livestock. The tasks further include capturing muzzle images/video of livestock, capturing left body profile and right body profile images/video of the livestock, capturing teeth images/video of the livestock, and capturing image/video of ear tag ID associated with the livestock. The tasks can further include capturing one or more of: 3-dimensional (3D) data corresponding to whole body of livestock, teeth of the livestock, 180 degree view of livestock including right body profile, left body profile, rear body profile, and front body profile. In some embodiments, the images of the teeth of the livestock may be used to predict age of livestock by using an AI/ML model.

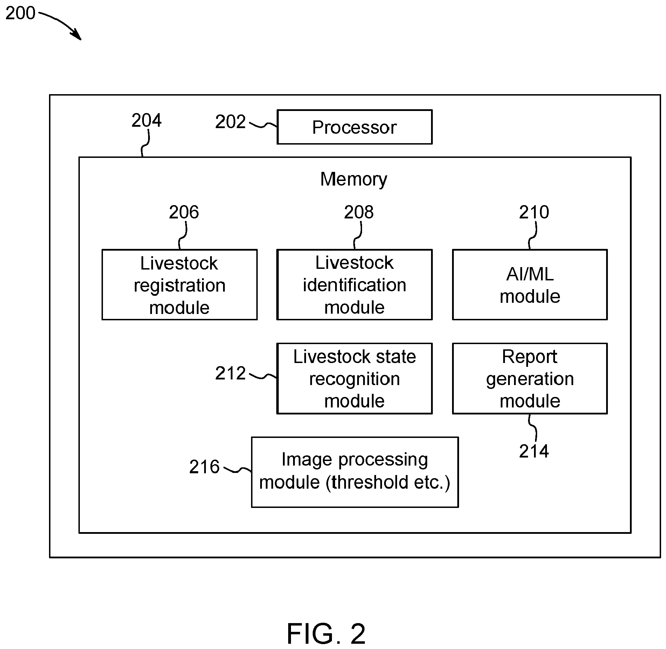

Fig. 2 shows an example of a client computing device 200 for use in livestock management ecosystem in accordance with an embodiment. The client computing device 200 includes one or more processors 202 configured to communicate with memory 204 to execute one or more instructions stored therein. In an embodiment, the memory 204 includes a livestock registration module 206, a livestock identification module 208, an Artificial Intelligence (AI)/Machine Learning (ML) module 210, livestock state recognition module 212, a report generation module 214 and an image processing module 216. The memory 204 may further include other modules (not shown) such as, de-duplication module and body-part classifier. Non-limiting examples of the client computing device 200 include a mobile device, a laptop, a tablet, a personal computing device, a digital camera, a multimedia device, a handheld camera device, a 3-dimensional camera, a pole/wall mounted camera, and a closed-circuit television (CCTV) camera. In an embodiment, the client computing device 200 is carried to the farm premises by a FIO/FIT for the purposes of validating the identity of livestock. In another embodiment, the client computing device 200 may be any device that has the client application installed therewithin.

In an exemplary embodiment, the client computing device 200 includes an application level software (frontend) that can be downloaded and executed in the client computing device 200. Such a client application may comprise of multiple modules and/or processing units that provide for frontend functionalities at the client computing device 200. In an embodiment, the client application includes Open Source Computer Vision (OpenCV) and TensorFlow libraries. In still a further implementation, the client application implements various neural network models, such as, Resnet, Mobilenet V3 large, Siamese network, and other pre-trained models. A person skilled in the art would acknowledge that the implementation of the invention is not limited to these neural network models and may encompass additional models related to computer vision. The technical stack in the client application includes Android, OpenCV, Python, Pytorch, Keras, TensorFlow, Flask, and PostgreSQL. In another embodiment, you only look once (yolov3) model is deployed in the client application for validation of captured images by detecting the body parts of the livestock. The client application then uploads only valid images to cloud (network) for the livestock registration. In an embodiment, the client application is agnostic to the operating system environment of the client computing device 200. The client application may implement/include the one or more modules (e.g. 206, 208, 210, 212, 214, 216) for the purposes of the ongoing description. In an embodiment, the client application implements an Artificial Intelligence (AI) model to perform a set of steps/functions for end-to-end livestock management. For example, the AI model performs a registration of a newly onboard livestock, creates a unique ID for the newly onboard livestock, identifies a livestock, and/or triggers a suitable action such as report generation.

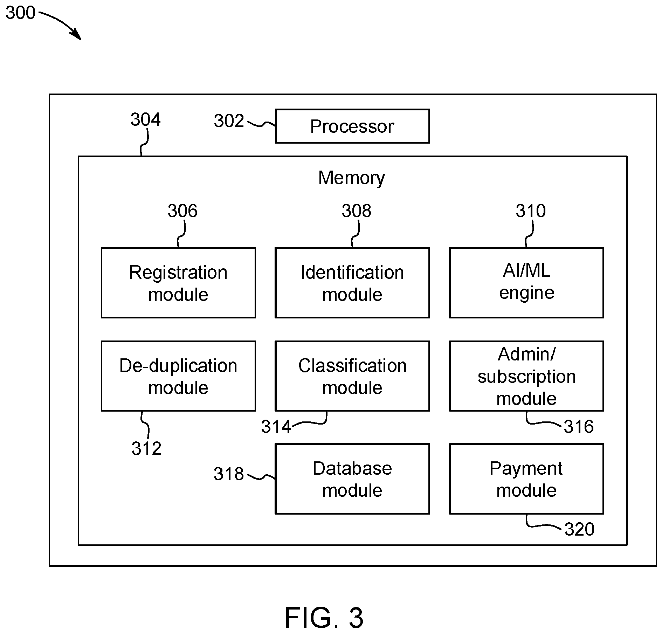

It may be appreciated that a corresponding backend application runs on a server computing device (e.g. 112, 300) that works with the frontend application on the client computing device 200 for livestock management. The various components of server-side application will be explained in detail with reference to Fig. 3. It may also be noted that a client-server architecture as shown in Fig. 1 is most suitable for the livestock management ecosystem because of the inherent complexity and volume of data storage and processing involved. The client application can send data, image and one or more queries to the server-side application. The server-side application can respond to the queries and/or simply store data received from the client application in database (e.g. 114). In alternate embodiments, the disclosed systems and methods can also be implemented in a distributed cloud architecture or edge cloud architectures without departing from the scope of the ongoing description. With significant improvements in computing powers of client computing devices, most or all of the steps of the disclosed methods may be performed at the client computing device.

At a hardware level, there maybe one or more specifications for the client computing device 200 for a suitable execution of the client front-end application. For example, the free or available memory space (RAM) required for execution of the client application is greater than or equal to around 256 MB and a storage space. Further, a storage space of around 75MB or greater is required for execution of the client application. A minimum processing power configuration of 1.8Ghz octa-core CPU is desirable for best results. Application level permissions to the hardware include permission to launch microphones, camera(s), launch GPS, access memory storage, short messaging services (SMS), and other sensors of the client computing device 200. Other permissions for the client application include permission to capture data from sensors, access location data from GPS sensors, etc. In case of a client computing device running on Android operating system, it may be desirable to install Android 5.0(Lollipop) or above. It may be noted that the client application is agnostic to the type of operating system running on the client computing device.

Such specifications of the client computing device 200 may impact the performance of the application. In an embodiment, one or more service parameters define the metrics of success or performance of the livestock management ecosystem. Such service parameters may include accuracy and latency. There is usually a trade-off between accuracy and latency at any given instant. It will be appreciated that the processing and memory resources in the client computing device 200 are limited in comparison to the server computing device (e.g. 112, 300). Therefore, the client application (frontend) is developed in such a manner that it consumes minimum processing and memory resources such as those available in the client computing device 200. Accordingly, the processing-intensive steps of livestock registration, livestock identification, image processing etc. are handled at the serve end and the client application is more focused towards ease of use and desirable user experience. It may be appreciated by those skilled in the art that various modules at the client computing device 200 and server computing device 300 can be developed and deployed interchangeably in either the server computing device and/or client computing device without deviating from the scope of the ongoing disclosure. In certain other embodiments, all or most of the functionalities can be achieved in the client computing device 200 or the service computing device 300 based on the available computing resources.

In an embodiment, for registration purposes, the livestock registration module 206 uses an image or a video capturing device such as a camera (not shown) of the client computing device 200 to capture biometric data (e.g. a muzzle print) and/or body part images/videos of a newly onboard livestock. In other embodiments, one or more peripheral devices, such as, barcode reader, image scanner, 3-dimensional cameras, may also be connected to the client computing device 200 for capturing biometric data/images. Such biometric data and/or images and/or videos are sent to the server computing device for registration of a newly onboard livestock and for creating a unique ID for the livestock. To avoid duplicate entries or similar entries during registration process, it may be desirable to create unique ID for the newly onboard livestock. Accordingly, the livestock registration module 206 triggers the capture of a plurality of images/videos for the same livestock. In an embodiment, the livestock registration module 206 triggers the user or human operator (FIO/FIT) to capture multiple images or videos for the same livestock from one or more viewpoints and elevation angles. Such triggers may be provided at the first instance of capturing or may be provided at a later instance based on a determination that the plurality of images/videos need to be captured again. A large set or plurality of images/videos of livestock may include substantially similar images/videos leading to inaccuracies during the creation of a unique ID. The proposed approach implements various mechanisms to ensure that there exists a singularity between the unique identifier and the corresponding newly onboard.

In some embodiments, the plurality of images/videos are sent to the server computing device for selecting the best image/video for the purposes of registration. In some other embodiments, however, the client computing device 200 may perform image filtering to select the best image/video for registration. In normal operations, the registration process can be triggered by a human operator of the client computing device 200, for example, by launching the client application. Although not shown, the client computing device 200 includes a display device that displays the captured image or video or other such data to the human operator once the application is launched, during the registration process, during the identification process, report generation process etc. The livestock registration module 206 is configured to receive a registration confirmation from the server application once the registration is successfully completed. Such a confirmation can be displayed on a user interface on the display device. In an embodiment, the livestock registration module 206 provides an option for a manual override at any stage of the registration process based on an input from the human operator.

The livestock identification module 208 performs identification of a livestock based on previously captured biometric data and/or images/videos of the livestock. As described earlier, in an example embodiment, the FIO/FIT may want to authenticate an identity of a livestock. For such authentication, the FIO/FIT can launch the client application hosted in the client computing device and trigger the livestock identification module 208. Once triggered, the livestock identification module 208 launches the camera or any image/video capturing device of the client computing device 200 to capture one or more images/videos of the livestock (to be identified). In an embodiment, the livestock identification module 208 may trigger the FIO/FIT to capture multiple images/videos for higher accuracies. The livestock identification module 208 sends such captured images/videos to the server computing device (e.g. 300) along with an identification request. The livestock identification module 208 receives a result of the identification process from the server application and displays the result to a user/FIO/FIT on the display of the client computing device 200. In an embodiment, the livestock identification module 208 provides an option for a manual override at any stage of the identification process based on an input from the human operator.

The AI/ML module 210 implements one or more algorithms for enhancing the accuracy and reducing the latency of various functionalities provided by the client application. For example, at the client end, the AI/ML module 210 is configured to select the best representative image/video for a particular livestock before sending it to the server computing device. In another example, the AI/ML module 210 may set one or more thresholds for selecting an image/video as a valid sample to be included in a plurality of images/videos for a livestock for registration and/or identification. In an embodiment, the AI/ML module 210 provides an option for a manual override at any stage of the registration process based on an input from the human operator. It may be noted that the AI/ML capabilities may be distributed between the client computing device 200 and the server computing device 300 based on the resources (e.g. computing, memory, network) available with the devices. With the recent developments in cloud computing architecture and server-less architectures, various configurations are possible for implementing the AI/ML components at the client computing device and the server computing device.

In an exemplary embodiment, the AI/ML module 210 is configured to create a unique identifier (ID) for the newly onboard livestock in such a manner that there exists a singularity between the unique identifier and the corresponding newly onboard livestock. For the purposes of the ongoing description, "singularity" refers to a state, a fact, a quality, or a condition of being singular or unique. In the context of registration of a newly onboard livestock, a singularity between the unique identifier and the newly onboard livestock ensures a unique 1-1 mapping. Such a singularity reduces the identification errors and/or multiple registration of same livestock. Lack of singularity is one of the reasons for poor identification process.

In an embodiment, the AI/ML module 210 is configured to dynamically extract one or more features associated with the newly onboard livestock from the plurality of images/videos of the newly onboard livestock. In an embodiment, the one or more features include data corresponding to a biometric data, a muzzle print, and/or at least one body part of the newly onboard livestock. In an embodiment, the AI/ML module 210 is further configured to select one or more images/videos based on similarity of images/videos amongst the plurality of images/videos of the newly onboard livestock. In an embodiment, the AI/ML module 210 computes a similarity score for each of the plurality of images/videos of the newly onboard livestock with respect to each other. In an embodiment, the AI/ML module 210 is further configured to perform a de-duplication process on the selected images/videos of the newly onboard livestock to determine a unique image/video associated with the newly onboard livestock. In an embodiment, the AI/ML module 210 is further configured to generate and use a patch/combination of a unique biometric-based ID and a unique body-based ID of the newly onboard livestock to create the unique ID for the newly onboard livestock. In an embodiment, the AI/ML module 210 is further configured to map the unique ID of the newly onboard livestock to a unique image/video and a demographic data of the newly onboard livestock. Once the unique ID is created, the livestock registration module 206 is further configured to trigger encryption of the unique ID of the newly onboard livestock. The encryption may be performed locally in the client computing device 200 or remotely in the server computing device 300. In an embodiment, the AI/ML module 210 may perform the encryption of the unique ID before sending the same to the server computing device.

In an embodiment, the AI/ML module 210 is further configured to use an AI model to analyze the creation of the unique ID of the newly onboard livestock. This analysis may be used for improving the accuracies of the ID creation process with each iteration by employing ML algorithms. In an embodiment, the AI/ML module 210 is further configured to perform a de-duplication process on the plurality of images/videos based on a comparison of the one or more parameters of the newly onboard livestock with one or more parameters of pre-existing livestock. In an embodiment, the AI/ML module 210 is further configured to trigger a recapture of the plurality of images/videos of the newly onboard livestock from a different elevation angle and/or a different viewpoint if a positive match is found between the one or more parameters of the newly onboard livestock and the one or more parameters of pre-existing livestock. To improve the accuracy, the AI/ML module 210 performs the de-duplication process after every instance of such a recapture. In an embodiment, the AI/ML module 210 is further configured to trigger an update of an existing unique ID (previously created) with the recaptured plurality of images/videos if a positive match is again found between the one or more parameters of the newly onboard livestock and the one or more parameters of pre-existing livestock. This assumes that the recaptured plurality of images/videos actually correspond to the existing ID. In an embodiment, the AI/ML module 210 is further configured to generate and store the unique ID in a database if a match is not found between the one or more parameters of the newly onboard livestock and the one or more parameters of pre-existing livestock. Such a database may be locally or remotely located. In a preferred embodiment, the database may be located in a cloud computing network. In an embodiment, the AI/ML module 210 is further configured to iteratively perform the de-duplication process on the plurality of images/videos. In an embodiment, the AI/ML module 210 is further configured to select one or more images/videos from the plurality of images/videos and perform the de-duplication process in an iterative manner on the selected one or more images/videos.

The livestock state recognition module 212 is configured to aid in recognizing a state (e.g. alive, dead, asleep) of a livestock. For example, a farm owner using the client computing device 200 may trigger the livestock state recognition module 212 to understand the state of the livestock. As with the other modules, when the operator selects state recognition function provided by the client application, the livestock state recognition module 212 launches the camera of the client computing device 200. The operator may then capture multiple images/videos of the livestock whose state is to be recognized. The livestock state recognition module 212 is configured to send the captured images/videos to the sever application with a query for state recognition. The livestock state recognition module 212 is configured to receive the response from the server and display the result(s) to the human operator on the display of the client computing device 200. In an embodiment, the livestock state recognition module 212 provides an option for a manual override at any stage of the livestock state recognition process based on an input from the human operator. In an embodiment, data from various health monitoring devices can be analysed for state recognition by the state recognition module 212 using AI/ML techniques.

The report generation module 214 is configured to generate a report based on one or more operations performed by human operator (e.g. FIO/FIT) for records. For instance, once the FIO/FIT has successfully authenticated the validity of an insurance claim, the FIO may trigger the report generation feature of the client application to trigger the generation of a report. The report generation module 214 generates the report and sends it to the server computing device for further action and/or storage in database.

The image processing module 216 is configured to perform image processing steps for livestock registration, identification, etc. For example, the image processing module 216 may implement a pre-determined setting for the camera during the livestock registration and/or identification process. There may be a plurality of such pre-determined settings that is implemented by the image processing module 216 based on the ambient light, time of the day, type of image to be captured, portion of the body of livestock being captured, etc. The AI/ML module 210 sets various thresholds for the image parameters that are applied by the image processing module 216 post capturing the image and prior to sending the captured image to the server computing device. The thresholds may include an image size, image contrast, image encryption complexity, image encoding threshold, image resolution, etc. For instance, it may be desirable to have the image resolution of at least 640*480.

Fig. 3 shows an example of a server computing device 300 for use in livestock management ecosystem in accordance with an embodiment. The server computing device 300 includes one or more processors 302 configured to communicate with memory 304 to execute one or more instructions stored therein. In an embodiment, the memory 304 includes a registration module 306, an identification module 308, an Artificial Intelligence (AI)/Machine Learning (ML) engine 310, a de-duplication module 312, a classification module 314, an admin/subscription module 316, a database module 318, and a payment module 320. Non-limiting examples of server computing technologies include Python, Postgres, NoSQL, Distributed computation, GPU, Linux, etc. Typically, the server computing device 300 is central to the client-server architecture and has high availability of processing power, memory and network resources as compared to the client computing device 200. In an embodiment, the server computing device 300 corresponds to a server hosted in a cloud computing environment. In another embodiment, the server computing device 300 may include a distributed set of computing devices that function together or in a distributed manner to perform some or all the functions of the server computing device 300 described herein.

In an exemplary embodiment, the server computing device 300 includes an application level software (backend) that can be downloaded and executed in the server computing device 300. Such a server application may comprise of multiple modules and/or processing units that provide for backend functionalities at the server computing device 300. In an embodiment, the server application is agnostic to the operating system environment of the server computing device 300. The server application may implement/include the one or more modules (e.g. 306, 308, 310, 312, 314, 316, 318, and 320) for the purposes of the ongoing description. In an embodiment, the server application implements an Artificial Intelligence (AI) model to perform a set of steps/functions for end-to-end livestock management. For example, the AI model performs a registration of a newly onboard livestock, creates a unique ID for the newly onboard livestock, identifies a livestock, and/or triggers a suitable action such as report generation.

It may be appreciated that the server-side application works with frontend client application running on the client computing device 200 for livestock management. The various components of server-side application and client-side application can be developed keeping in view the various resources (e.g. computing, storage, network) available at the server and the client end. As explained earlier, the client application can send data, image, video, and/or one or more queries to the server-side application. The server-side application can respond to the queries and/or simply store data received from the client application in database (e.g. 114).

In an embodiment, the livestock geo-information, feature data, and/or livestock metadata are sent to the server computing device 300 using one or more APIs which help in determining the right model to perform various steps such as, checking for duplicates, classifying the cattle, and/or responding back with classified livestock and associated details. Various types of APIs are envisaged under the scope of ongoing description and any APIs developed in future is assumed to support the communication between the client computing device 200 and the server computing device 300 for the purposes of this disclosure.

As an illustrative and non-limiting example, the server computing device 300 may implement and provide a plurality of Python Web-Services APIs to the client application. For example, the server computing device 300 may include a 1^{st} API for saving dairy and farm details in the database 114. The server computing device 300 may include a 2^{nd} API for uploading livestock images captured during registration process from client application to the cloud (server). The uploaded images can be used to register livestock using subsequent APIs. The server computing device 300 may also include a 3^{rd} API for loading previously trained models and checking if livestock is already registered or not at the de-duplication end point. The 3^{rd} API then sends the status back to client application. The server computing device 300 may include a 4^{th} API for loading prediction model by dairy ID and farm ID, training Pytorch livestock classification model with transfer learning on mobilenet v3 large. The server computing device 300 may include a 5^{th} API for loading all models by dairy ID and farm ID to predict livestock ID. The server computing device 300 sends the response back to the client application. The server computing device 300 may include a 6^{th} API for predicting age of the livestock using teeth images and other supporting criteria. It may be appreciated by those skilled in the art that any number of APIs can be implemented in the server computing device 300 without departing from the scope of the ongoing description.

At a hardware level, there maybe one or more specifications for the server computing device 300 for a suitable execution of the server backend application. For example, the free or available RAM space of at least 50GB, a GPU memory of at least 16 GB, and SSD storage of around 900 GB may be required for the server computing device 300. The server computing device 300 may have a suitable GPU card, for example and not restricted to, Nvidia-T4 and the like. A non-limiting example of an operating system running in the server computing device 300 may be Linux - Ubuntu-18.04-LTS. A minimum processing power equivalent of 12 vCPUs may be desirable for acceptable service parameters. In addition, the server computing device 300 needs a large storage capacity and/or access to databases for storage of large amounts of data received from the client computing devices. Faster memory technologies can ensure reduced latency. It may be appreciated by those skilled in the art that the above specifications may vary depending on the computing environment and expected load. A person skilled in the art may appropriately determine the hardware requirements (of the client computing device and the server computing device) based on available technologies and applicable use cases without undue experimentation.

Such specifications of the server computing device 300 also impacts the performance of the application. For example, the service parameters such as, accuracy and latency may be a direct function of the hardware specification of the server computing device 300. It will be appreciated that the processing and memory resources in the server computing device 300 can be expanded as compared to the client computing device. Therefore, the sever application (backend) is developed in such a manner that may consume higher processing and memory resources such as those available in modern-day server computing devices. Accordingly, the processing-intensive steps of livestock registration, livestock identification, image processing etc. are handled at the server end. It may be noted that depending on the processing power and memory resources, basic validation such as blur check, light check, etc. may be performed in the client computing device, and any other required image processing steps may be performed in the server.

In an embodiment, the registration module 306 is configured to receive a registration request from the client application in the client computing device 200. The process of creating a new entry and assigning a unique identifier for every new livestock is referred to as "registration" in the ongoing description. As described earlier, for higher accuracies in identification process, it is desirable that there is only one unique ID for every livestock or there exists a singularity. To this end, the registration module 306 may implement AI based registration in an embodiment. Further, for every new registration, the registration module 306 receives a plurality of images/videos instead of a single image/video for the livestock. Multiple images/videos of the same livestock taken from different elevation angles and viewpoints represent a plurality of features, body parts of the livestock, and unique biometric prints. For creating a robust training model, it is desirable to capture as many images/videos of the new livestock to perform (post capture) image processing and augmentation in order to select the best representation (image/video) of the livestock resulting in a unique ID creation. The AI/ML engine 310 receive and process the set of images/videos from the client application for creating a unique ID for the newly onboard livestock. The registration module 306 sends the unique ID to the livestock registration module 206 along with other details to mark the registration as "complete".

In an embodiment, the server application is configured to receive other data associated with the livestock from the client application. In an exemplary embodiment, the data that can be captured from a farm setting include identification details of livestock, images of different body parts of livestock, health details of livestock since birth, historical data for the livestock treatment, medical history of ailments of livestock (if any), produce from individual livestock, details regarding the breed/ancestors of the livestock, nutrition consumption details consumed by the livestock, data associated with the quality of produce, data associated with insurance of the livestock, data associated with the sale/purchase of the livestock including the details of the ownership history, supply chain details, warehousing details of products from livestock, packaging details of the products from livestock, price details of the produce from livestock, vital statistics and body characteristics (height, weight, length, color etc.) of the livestock and the like. In other words, any data that can be captured by the client application for the livestock can be received and consumed by the server application for various purposes. Various modules in the server application are configured to correlate one or more of the above described data and create a training dataset to train the AI/ML engine 310 for achieving higher accuracies not just for registration and identification of livestock but also for other aspects of livestock management.

The registration module 306 receives biometric data and/or images/videos from the client computing device for registration of a newly onboard livestock and for creating a unique ID for the livestock. In an embodiment, the registration module 306 is configured to receive multiple images/videos for the same livestock from the livestock registration module 206. The registration module 306 is configured to send a registration confirmation to the livestock registration module 206 once the registration is successfully completed.

The identification module 308 is configured to receive an identification request of a livestock based on previously captured biometric data and/or images/videos of the livestock. In an embodiment, the identification module 208 may receive multiple images/videos for of a livestock during the identification process for higher accuracies. The identification module 308 implements various feature extraction techniques for unique match with previously stored biometric data/image/video of the livestock. The identification module 308 sends a result of the identification process to the client application for displays to a user/FIO/FIT on the display of the client computing device 200.

The AI/ML engine 310 implements one or more AI/ML algorithms for enhancing the accuracy and reducing the latency of various functionalities provided by the server/client applications. For example, at the server end, the AI/ML engine 310 is configured to select the best matching image for a particular livestock during an identification process. In another example, the AI/ML engine 310 may set or define one or more thresholds for selecting an image as a valid sample to be included in a set of images for a livestock for registration and/or identification. In yet another example, the AI/ML engine 310 correlates one or more features extracted from the received set of images for a livestock to create a unique digital signature or ID for the livestock during a registration process. In an embodiment, the one or more features include body parts such as eyes, ears, muzzle, tail, hump, face, body pattern, body colour, body shape, etc.

The AI/ML engine 310 assigns weights to one or more features extracted from the set of images of the livestock for the purpose of correlation. In an embodiment, the AI/ML engine 310 implements specific rules for application of pre-defined weights corresponding to specific species of livestock (e.g. Jersey cow). Such definition of features and respective weights can be pre-defined during the training of the AI/ML engine 310. In an embodiment, AI/ML engine 310 provides an option for manual override based on an input from the human operator. For example, a human operator can give feedback on wrong identification of livestock and such feedback will be used to update the "learned" weights on the server computing device 300 by appropriate means. The AI/ML engine 310 utilizes the extracted one or more features to accurately identify a livestock during an identification process.

As described above, disclosed systems and methods use an AI-based platform to authenticate/identify a livestock. In various embodiments, the AI/ML engine 310 identifies physiological characteristics in livestock's muzzle print and different body pattern images of the livestock. The AI/ML engine 310 also uses color, birth mark, injury mark, physical disablement identification, man-made marks, etc. as body pattern characteristics. In an embodiment, the AI/ML engine 310 implements a Convoluted Neural Network (CNN) to identify the age of a livestock by using teeth images and body parameters (such as height, shoulder, etc.). It may be appreciated that the ongoing description covers multiple combinations of various characteristics of a livestock to automatically learn and improve the accuracies of future identification. The AI/ML engine 310 implements Machine Learning (ML) algorithms to learn from the user feedback/manual overrides, incorrect matches, matching scores, latency in identification step, etc. The AI/ML model implemented and disclosed herein is configured to learn from each iteration and improve the service parameters (e.g. accuracy, latency) in future iterations.

In an embodiment, the AI/ML engine 310 uses a biometric (e.g. muzzle) based identification process to track a lost livestock. To this end, the AI/ML engine 310 implements a geotagging approach to find a location-specific information of the lost livestock. In another embodiment, the AI/ML engine 310 uses a body-based identification process to record farm interventions (such as diagnosis, vaccination etc.) to improve a nutritional status of livestock. For instance, the AI/ML engine 310 uses computer vision algorithms to identify livestock by its muzzle images. In yet another example, geo-location may be captured during registration of every livestock. Therefore, lost livestock may be traced back by searching the livestock muzzle ID through the farms which are in close proximity, thus determining the geo-location.

In still further embodiment, the AI/ML engine 310 creates unique ID of a given livestock by using a patch/combination of both a biometric based-ID and a body-based ID of the livestock. In another embodiment, the AI/ML engine 310 maps the unique ID to the corresponding image/video and demographic data of the livestock. In an implementation, the unique ID is encrypted to prevent tampering of the information of the livestock.

In another embodiment, the AI/ML engine 310 is configured to select the best matching/resembling image from multiple images/videos based on a similarity score. The similarity score may be generated based on similarity of features extracted from the plurality of images/videos. If a match or a potential close match is found in the database (e.g. 114) of the livestock, the AI/ML engine 310 enables a user to recapture a new image from a different elevation angle and/or viewpoint.

The de-duplication module 312 is configured to apply de-duplication techniques to remove the duplicate images/data so that potential errors are eliminated. In addition, de-duplication saves storage space. For example, the de-duplication process is applied on a plurality of received image(s)/video(s) of a given livestock to ensure that only one registration ID per livestock is created during the registration process. In case a close match is found in the database during registration, the de-duplication module 312 triggers the AI/ML engine 310 to send a request to the client application for recapturing the image/video of the livestock again from a different angle or elevation. The de-duplication module 312 again performs the de-duplication process to ensure unique identity. Further, if a match is again found (after de-duplication process), the captured images/videos of the livestock are updated on the matched ID of the existing livestock in the database. If, a match is not found, the AI/ML engine 310 creates a unique ID for the livestock.

In an embodiment, the AI/ML engine 310 triggers the de-duplication module 312 to perform the de-duplication process on the captured images/videos in an iterative manner to ensure only one registration ID per livestock. The AI/ML engine 310 dynamically extracts (from the plurality of images/videos) physiological features of livestock muzzle print or other identifiable physiological features that can be unique to the livestock from the images/videos. The AI/ML engine 310 picks the best image/video of the livestock and performs the de-duplication process in an iterative manner.

The classification module 314 is configured to implement an AI model (such as Convolution Neural Network models (CNN)) to classify a livestock based on one or more classification parameters. In an embodiment, the one or more classification parameters may include horn/de-horn, muzzle print, color of the livestock, body pattern, etc. In an embodiment, the classification module 314 is configured to classify livestock body parts (e.g. face, leg, body) while capturing images/videos. In an embodiment, the classification module 314 uses a combination of body-based images and biometric data (e.g. muzzle print) to classify the livestock. The CNN model may better classify the livestock based on various combinations of parameters. For example, different combinations of horn/de-horn, muzzle, body patterns, face, eyes and so on may be used to classify the livestock.

The AI/ML engine 310 is also configured to assist in recognizing the state (e.g. alive, dead, asleep) of a livestock. For example, the livestock state recognition module 212 may be triggered at the client end to recognize the state of a particular livestock. The operator may capture multiple images of the livestock and send the captured images to the sever application with a query/request for state recognition. The AI/ML engine 310 analyzes the sequence of captured images/video frames of the livestock to identify facial features (such as eyes, muzzle, etc.) and body actions and/or movements of the livestock. In an embodiment, the AI/ML engine 310 captures blinking of eyes, movement of tail, legs, ears, and mouth of the livestock from the captured sequence of images in order to determine the state of the livestock. In yet another embodiment, the AI/ML engine 310 uses various image processing techniques to analyze muzzle movement or moisture to further detect the state of the livestock. The AI/ML engine 310 is also configured to compare current images/videos of the livestock (captured at the time of state recognition) with a historical set of images/videos to detect the current state of the livestock. The AI/ML engine 310 may use various combinations of the above techniques to accurately recognize the state of the livestock and sends the result to the livestock state recognition module 212.

In an embodiment, the state of the livestock may correspond to binary outputs such as, an alive state or a dead state. In another embodiment, the AI/ML engine 310 is configured to recognize other states of the livestock. For example, the AI/ML engine 310 is configured to recognize an unwell or sick state, an unconscious (and alive) state, a trauma state, an anesthetic state, a sleep state (induced or otherwise), a frightened state, a happy/relaxed state and the like.

The client application may display the result of state recognition via the UI to a human operator (e.g. livestock owner, FIO/FIT). In all cases, the result displayed may be overridden based on a user input from the human operator. Such and all other manual overrides described during various stages of livestock registration, livestock identification, livestock classification, de-duplication of livestock images, livestock state recognition is captured and may be used as a feedback to dynamically improve the accuracies in future iterations. In an embodiment, a log of all such manual overrides is maintained at the server computing device 300 for records and future audit.

The database module 318 is configured to provide database management functions in the server computing device 300. As described earlier, one or more databases may be implemented either locally on the server computing device or in the cloud computing network. The registered IDs and corresponding metadata (e.g. images, videos, parameters, feature data and information related to corresponding trained models) may be stored in such databases. Various known technologies may be implemented for efficient read and write access to the databases.

It is envisioned that the stakeholders or users may download the client application from a server (e.g. 300) and install it in the client computing device 200. In a scenario where such downloads are payable, the server computing device 300 may implement the payment module 320 for managing online payments.

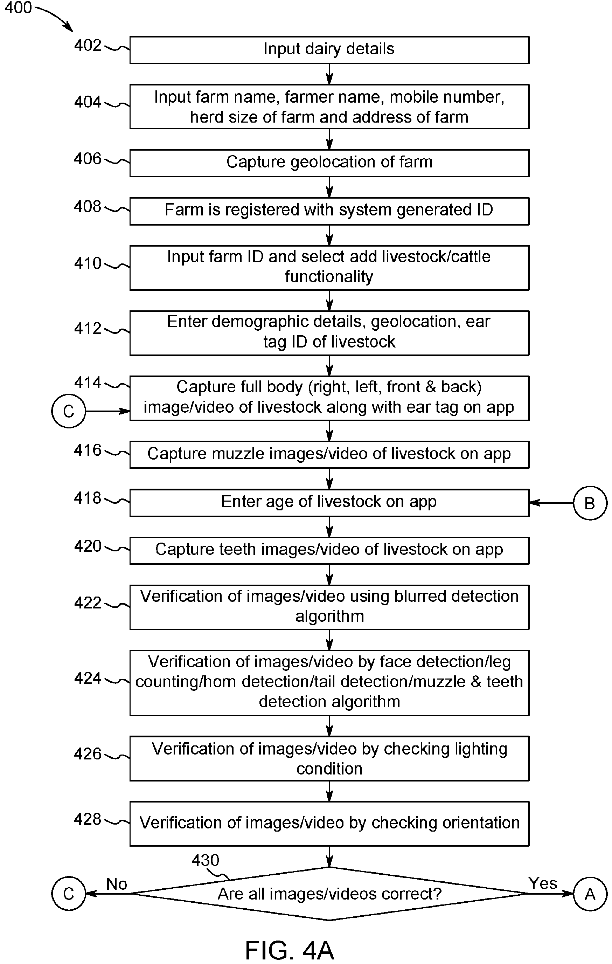

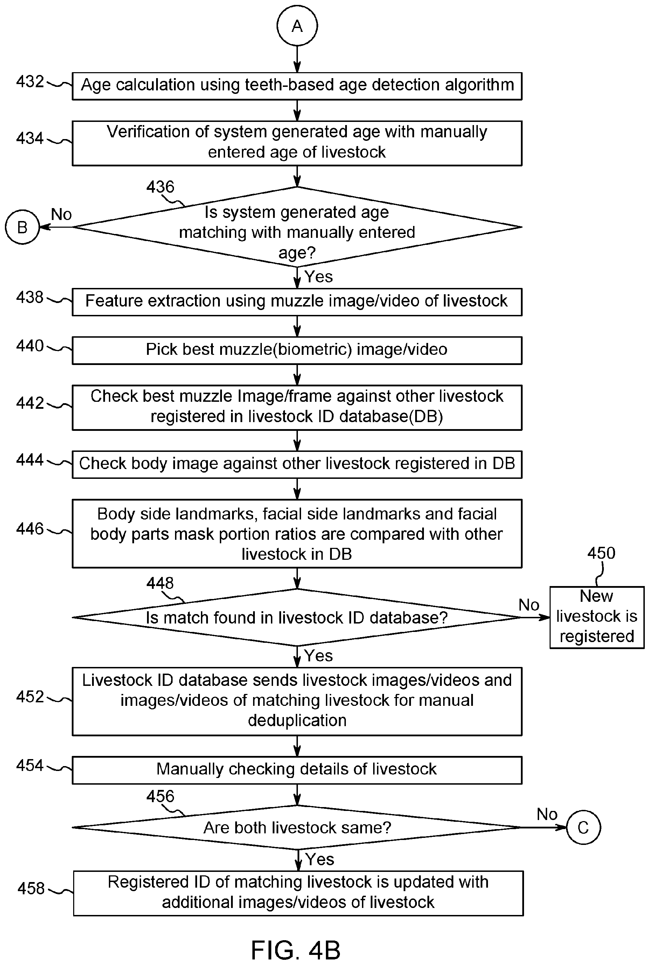

Figs. 4a and 4b show an example muzzle-based registration process/method 400 for livestock in a livestock management ecosystem in accordance with an embodiment. With reference to Figs. 1-3, the process is explained in 7 phases: farm registration, data capturing, image/video validation, age verification, de-duplication, manual de-duplication, and ID generation. In an embodiment, the phases may be implemented in the client application UI to sequentially take a user through the registration process/method 400. Further, all manual steps are performed by a human operator or a user or FIO/FIT.

The farm registration phase begins with the step 402 of inputting dairy details. The process proceeds to next step 404 of inputting farm name, farmer name, mobile number (cell #), herd size of farm and address of farm etc. The process proceeds to next step 406 of capturing geolocation of the farm. At step 408, the farm is registered with a system generated ID (i.e. Farm ID).

The data capturing phase begins with the step 410 of inputting a Farm ID and selecting add livestock/cattle functionality. Next, at step 412, demographic details, geolocation, and ear tag ID of livestock are entered. Next, at step 414, image/video of full body (right, left, front & back) of livestock along with ear tag ID are captured on the client application. Next, at step 416, muzzle images/video of livestock are captured. At step 418, age of livestock is entered. Next, at step 420, teeth images/video of livestock are captured on the client application.

The image/video validation must be performed to ensure standard quality of images/video stored in the database. This would ensure the accuracy of the results. The image/video validation phase begins at step 422 of verification of images/video using blurred detection algorithm to avoid any blurred images. Next, at step 424, verification of images/video is performed based on one or more algorithms that include, but not limited to, face detection, leg counting, horn detection, tail detection, muzzle & teeth detection algorithms. For example, livestock age prediction may be performed by its teeth images/videos. The teeth images of a livestock may be cropped and added as an input to age classification model to determine an estimated age of the livestock. For instance, a whole teeth set may be cropped as a single region and provided as an input to the classification model. Next, at step 426, verification of images/video is performed by checking lighting conditions. Next, at step 428, verification of images/video is performed by checking orientation. Next, at step 430, it is determined whether all images/videos are correctly captured or not. For instance, if the orientation of images/video is not landscape/horizontal, then it is determined that the images/videos are not correctly captured. If yes, the process proceeds to step 432 else the process loops back to step 414.

The age verification phase begins at the step 432 of calculating age using teeth-based age detection algorithm. In an embodiment, Convolution Neural Network models (CNN) use teeth images/video as major contributor and body side landmarks (e.g. paw, hip bone, shoulder bone, front knee, back knee) as supporting criteria in predicting the age of the livestock. Next, at step 434, system generated age is verified with manually entered age of livestock. Next, at step 436, it is determined whether the system generated age matches with manually entered age. If yes, the process proceeds to step 438 else the process loops back to step 418. In case of a mismatch, the FIO/FIT has to re-enter the age of the livestock in the client application along with new teeth images/video. This step will be followed by image/video validation process and age verification process.

The de-duplication phase begins at the step 438 of feature extraction using muzzle image/video of livestock. For example, the AI/ML engine 310 dynamically extracts physiological features of livestock muzzle print or other identifiable physiological features from the muzzle image/video. Next, at step 440, best muzzle (biometric) image/video is picked. Next, at step 442, best muzzle image/frame against other livestock registered in livestock ID database (DB) is checked. Next, at step 444, body image against other livestock registered in DB is checked. Next, at step 446, body side landmarks, facial side landmarks and facial body parts mask portion ratios are compared with other livestock in DB. Next, at step 448, it is determined whether match is found in livestock ID database. If yes, the process proceeds to step 452 of sending livestock ID database images/videos and images/videos of matching livestock for manual de-duplication else the process proceeds to step 450.

The manual de-duplication phase begins at the step 454 of manually checking details of livestock. In case the client application detects the duplicate entry of the livestock against the same farm ID, the images of both - livestock to be registered and matching livestock - will be shared with FIO/FIT. Next, at step 456, it is determined whether both livestock are same. If yes, the process proceeds to step 458 else the process loops back to step 414. In other words, if the FIO observes that both the livestock are not same, more images/video of the livestock will be captured by the FIO and all the above phases will be followed again to ensure that there is a unique entry of the livestock in the database.

The ID generation phase begins at the step 458 of updating registered ID of matching livestock with additional images/videos of livestock. At step 450, new livestock is registered.

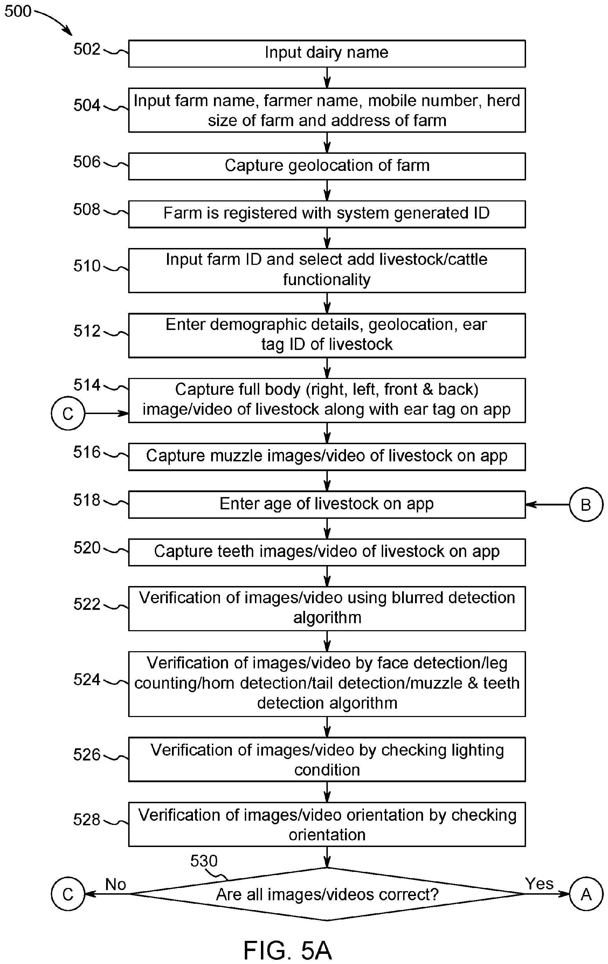

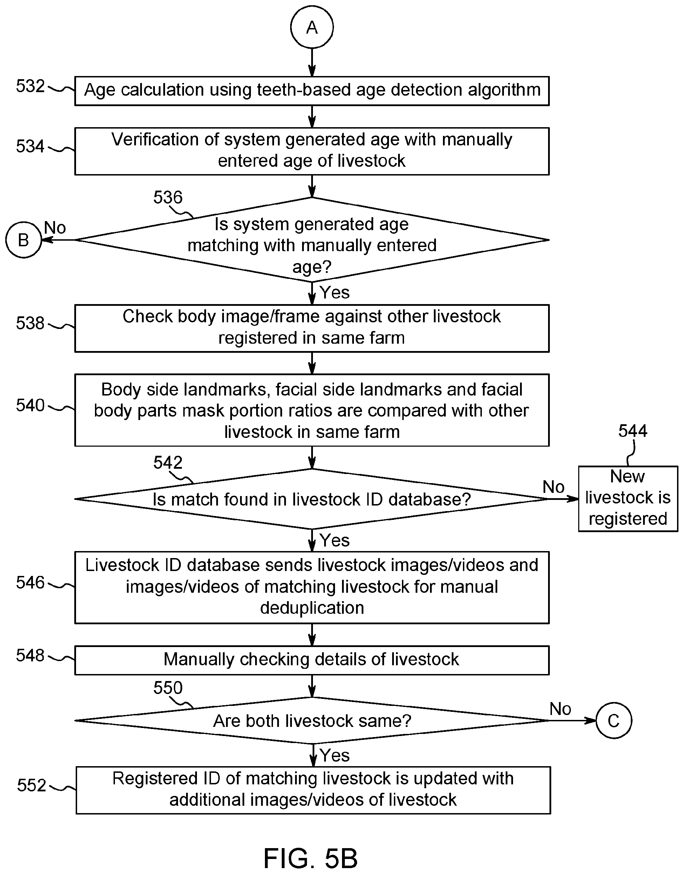

Figs. 5a and 5b show an example body-based identification process/method 500 for livestock in a livestock management ecosystem in accordance with an embodiment. With reference to Figs. 1-3, the process is explained in 7 phases: farm registration, data capturing, image/video validation, age verification, de-duplication, manual de-duplication, and ID generation. In an embodiment, the phases may be implemented in the client application UI to sequentially take a user through the registration process/method 500. Further, all manual steps may be performed by a human operator or a user or FIO/FIT.

The farm registration phase begins with the step 502 of inputting dairy details. The process proceeds to next step 504 of inputting farm name, farmer name, mobile number (cell #), herd size of farm and address of farm etc. The process proceeds to next step 506 of capturing geolocation of the farm. At step 508, the farm is registered with a system generated ID (i.e. Farm ID).

The data capturing phase begins with the step 510 of inputting a Farm ID and selecting add livestock/cattle functionality. Next, at step 512, demographic details, geolocation, and ear tag ID of livestock are entered. Next, at step 514, image/video of full body (right, left, front & back) of livestock along with ear tag are captured on the client application. Next, at step 516, muzzle images/video of livestock are captured. At step 518, age of livestock is entered. Next, at step 520, teeth images/video of livestock are captured on the client application.

The image/video validation phase begins at step 522 of verification of images/video using blurred detection algorithm. Next, at step 524, verification of images/video is performed by one or more algorithms that include face detection, leg counting, horn detection, tail detection, muzzle & teeth detection algorithms. Next, at step 526, verification of images/video is performed by checking lighting conditions. Next, at step 528, verification of images/video is performed by checking orientation. Next, at step 530, it is determined whether all images/videos are correctly captured or not. If yes, the process proceeds to step 532 else the process loops back to step 514.

The age verification phase begins at the step 532 of calculating age using teeth-based age detection algorithm. Next, at step 534, system generated age is verified with manually entered age of livestock. Next, at step 536, it is determined whether the system generated age matches with manually entered age. If yes, the process proceeds to step 538 else the process loops back to step 518.

The de-duplication phase begins at the step 538 of checking body image/frame against other livestock registered in same farm. Next, at step 540, body side landmarks, facial side landmarks and facial body parts mask portion ratios are compared with other livestock in same farm. Next, at step 542, it is determined whether the match is found in livestock ID database. If yes, the process proceeds to step 546 of sending database livestock images/videos and images/videos of matching livestock for manual de-duplication else the process proceeds to step 544.

The manual de-duplication phase begins at the step 548 of manually checking details of livestock. Next, at step 550, it is determined whether both livestock are same. If yes, the process proceeds to step 552 else the process loops back to step 514.

The ID generation phase begins at the step 552 of updating registered ID of matching livestock with additional images/videos of livestock. At step 544, new livestock is registered.

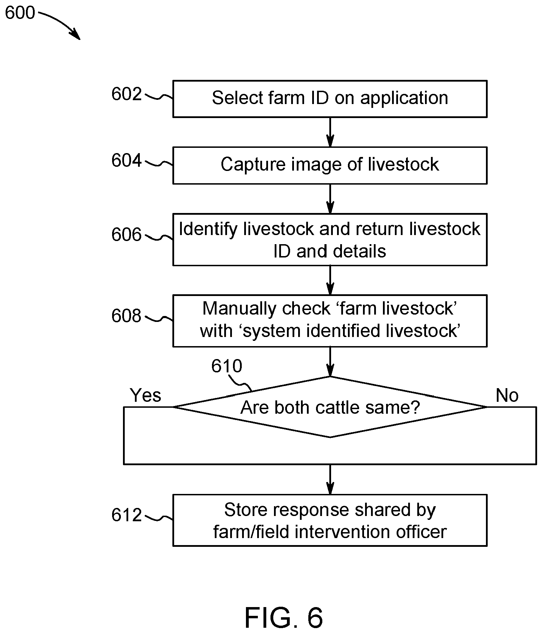

Fig. 6 shows an example identification process 600 for livestock in a livestock management ecosystem in accordance with an embodiment. The livestock identification process may be triggered by launching the client application and selecting the identification option on the UI. All manual steps are performed by a human operator or a user or FIO or FIT.

With reference to Figs. 1-6, the process 600 includes the step 602 of selecting farm ID on the client application by a FIO. Next, at step 604, the FIO/FIT captures image of livestock to be identified ("farm livestock"). Next, at step 606, the client application frontend (livestock identification module 208) identifies livestock and returns livestock ID and associated details. Next, at step 608, the FIO manually checks or compares the 'farm livestock' with 'system identified livestock'. Next, at step 610, the FIO manually determines whether both the livestock are same. Next, at step 612, the response from the FIO at step 610 is stored by the backend of the application (at the server computing device).

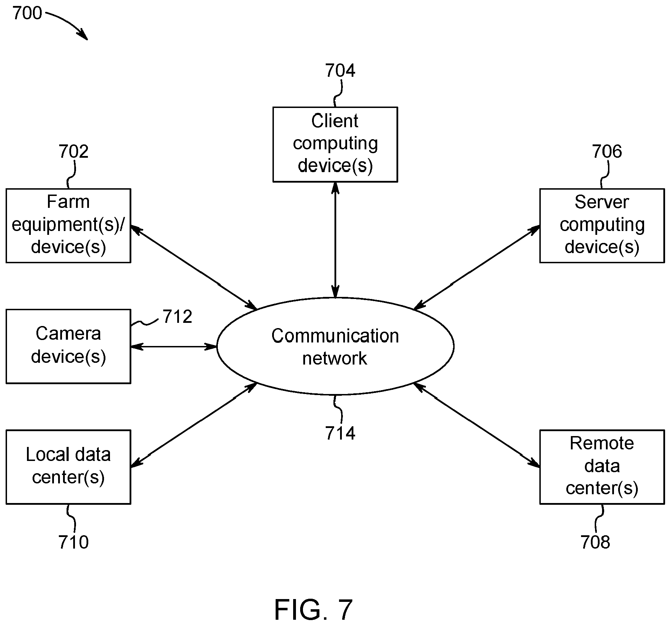

Fig. 7 shows an exemplary livestock management ecosystem 700 in accordance with an embodiment. As shown, the livestock management ecosystem 700 includes farm equipment(s)/device(s) 702, client computing device(s) 704, server computing device(s) 706, remote data center(s) 708, local data center(s) 710, and camera device(s) 712 all communicating to each other via a communication network 714. One of more of the components can be implemented in a single system. For instance, the camera devices(s) 712 may be integrated on the client computing device 704. Likewise, the remote data center(s) 708 may be integrated with the server computing device 706 as a single system. It may ne noted that the client computing device(s) 704 are similar in functionality to the client computing device 200 described earlier. Similarly, the server computing device(s) 706 are similar in functionality to the server computing device 300 as described earlier. In addition, the remote data center(s) 708 and the local data center(s) 710 may be implemented in a similar manner as the database 114 as described earlier.

There are numerous advantages and application areas for the described approach for livestock management. For example, the insurance companies and financial institutions can now accurately register and identify livestock for the purposes of validating an insurance claim. The data captured by the client application is uploaded to the server computing device and can be utilized for data analysis and predictive analytics for multiple purposes. For example, the system can use a biometric (e.g. muzzle) based identification process to track a lost livestock. To this end, the server computing device implements a geotagging approach to find a location-specific information of the lost livestock. The disclosed systems and methods also enable the use of a body-based identification process to record farm interventions (such as diagnosis, vaccination etc.) to improve a nutritional status of livestock.

Embodiments of a server computing device for registration of a newly onboard livestock are disclosed. In an embodiment, the server computing device includes a processor coupled to a memory and configured to execute one or more instructions stored in the memory. The memory includes an Artificial Intelligence (AI)/Machine Learning (ML) engine configured to extract one or more parameters, from a plurality of images/videos, associated with the newly onboard livestock. The AI/ML engine is further configured to create a unique identifier (ID) for the newly onboard livestock based on the one or more parameters in such a manner that there exists a singularity between the unique identifier and the corresponding newly onboard livestock. In an embodiment, the memory further includes a registration module configured to receive the plurality of images/videos of the newly onboard livestock from a client computing device. In an embodiment, the one or more parameters include data corresponding to a biometric data, a muzzle print, and/or at least one body part of the newly onboard livestock. In an embodiment, the AI/ML engine is further configured to select one or more images/videos based on similarity of images/videos amongst the plurality of images/videos of the newly onboard livestock. In an embodiment, the AI/ML engine is further configured to compute a similarity score for each of the plurality of images/videos of the newly onboard livestock with respect to each other. In an embodiment, the AI/ML engine is further configured to trigger a de-duplication process on the selected images/videos of the newly onboard livestock to determine a unique image/video associated with the newly onboard livestock.

In an embodiment, the AI/ML engine is further configured to generate and use a patch/combination of a unique biometric-based ID and a unique body-based ID of the newly onboard livestock to create the unique ID for the newly onboard livestock. In an embodiment, the AI/ML engine is further configured to map the unique ID of the newly onboard livestock to a unique image/video and demographic data of the newly onboard livestock. In an embodiment, the AI/ML engine is further configured to perform encryption of the unique ID of the newly onboard livestock. In an embodiment, the AI/ML engine is further configured to trigger a de-duplication process on the plurality of images/videos based on a comparison of the one or more parameters of the newly onboard livestock with one or more parameters of pre-existing livestock. In an embodiment, the AI/ML engine is further configured to trigger a recapture of the plurality of images/videos of the newly onboard livestock from a different elevation angle and/or a different viewpoint if a positive match is found between the one or more parameters of the newly onboard livestock and the one or more parameters of pre-existing livestock. The AI/ML engine is further configured to trigger the de-duplication process after every instance of recapture.

In an embodiment, the AI/ML engine is further configured to update an existing unique ID with the recaptured plurality of images/videos if a positive match is again found between the one or more parameters of the newly onboard livestock with the one or more parameters of pre-existing livestock. In an embodiment, the AI/ML engine is further configured to generate and store the unique ID in a database if a positive match is not found between the one or more parameters of the newly onboard livestock with the one or more parameters of pre-existing livestock. In an embodiment, the AI/ML module is further configured to iteratively perform the de-duplication process on the plurality of images/videos. In an embodiment, the AI/ML module is further configured to select one or more images/videos from the plurality of images/videos and perform the de-duplication process in an iterative manner on the selected one or more images/videos.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The term "one" or "single" may be used to indicate that one and only one of something is intended. Similarly, other specific integer values, such as "two," may be used when a specific number of things is intended. The terms "preferably," "preferred," "prefer," "optionally," "may," and similar terms are used to indicate that an item, condition, or step being referred to is an optional (not required) feature of the invention.

The invention has been described with reference to various specific and preferred embodiments and techniques. However, it should be understood that many variations and modifications may be made while remaining within the spirit and scope of the invention. It will be apparent to one of ordinary skill in the art that methods, devices, device elements, materials, procedures and techniques other than those specifically described herein can be applied to the practice of the invention as broadly disclosed herein without resort to undue experimentation. All art-known functional equivalents of methods, devices, device elements, materials, procedures, and techniques described herein are intended to be encompassed by this invention. Whenever a range is disclosed, all subranges and individual values are intended to be encompassed. This invention is not to be limited by the embodiments disclosed, including any shown in the drawings or exemplified in the specification, which are given by way of example and not of limitation.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

All references throughout this application, for example patent documents including issued or granted patents or equivalents, patent application publications, and non-patent literature documents or other source material, are hereby incorporated by reference herein in their entireties, as though individually incorporated by reference, to the extent each reference is at least partially not inconsistent with the disclosure in the present application (for example, a reference that is partially inconsistent is incorporated by reference except for the partially inconsistent portion of the reference).

## Claims

1. A method of registration of a newly onboard livestock, the method comprising: creating, by a computing device, a unique identifier (ID) for the newly onboard livestock in such a manner that there exists a singularity between the unique identifier and the corresponding newly onboard livestock.

2. The method of claim 1, wherein creating the unique ID further comprises using, by the computing device, an image/video capturing device to capture a plurality of images/videos of the newly onboard livestock, wherein creating the unique ID further comprises using, by the computing device, an Artificial Intelligence (AI)/Machine Learning (ML) module configured to dynamically extract one or more features associated with the newly onboard livestock from the plurality of images/videos of the newly onboard livestock, and wherein the one or more features comprises data corresponding to a biometric data, a muzzle print, and/or at least one body part of the newly onboard livestock.

3. The method of claim 2, wherein creating the unique ID further comprises selecting, by the computing device, one or more images/videos based on similarity of images/videos amongst the plurality of images/videos of the newly onboard livestock, wherein the selecting comprises computing a similarity score for each of the plurality of images/videos of the newly onboard livestock with respect to each other, and wherein creating the unique ID further comprises performing, by the computing device, a de-duplication process on the selected images/videos of the newly onboard livestock to determine a unique image/video associated with the newly onboard livestock.

4. The method of claim 1, wherein creating the unique ID further comprises using, by the computing device, a patch/combination of a unique biometric-based ID and a unique body-based ID of the newly onboard livestock, or wherein the method further comprises mapping the unique ID of the newly onboard livestock to a unique image/video and demographic data of the newly onboard livestock, or wherein the method further comprises encrypting, by the computing device, the unique ID of the newly onboard livestock, or wherein the method further comprises using, by the computing device, an Artificial Intelligence (AI) model to analyse the step of creating the unique ID of the newly onboard livestock.

5. The method of claim 2, wherein creating the unique ID further comprises performing, by the computing device, a de-duplication process on the plurality of images/videos by matching the one or more features of the newly onboard livestock with one or more features of pre-existing livestock stored in a database,
wherein creating the unique ID further comprises:
triggering, by the computing device, a recapture of the plurality of images/videos of the newly onboard livestock from a different elevation angle and/or a different viewpoint if a positive match is found in the database; and
performing, by the computing device, the de-duplication process,
wherein creating the unique ID further comprises updating, by the computing device, an existing unique ID with the recaptured plurality of images/videos if a positive match is again found in the database,
wherein creating the unique ID further comprises generating and storing, by the computing device, the unique ID in the database if a positive match is not found,
wherein creating the unique ID further comprises iteratively performing, by the computing device, the de-duplication process on the plurality of images/videos, and
wherein creating the unique ID further comprises:
selecting, by the computing device, one or more images/videos from the plurality of images/videos; and
performing, by the computing device, the de-duplication process in an iterative manner on the selected one or more images/videos.

6. A client computing device for registration of a newly onboard livestock, the client computing device comprising:
a processor coupled to a memory and configured to execute one or more instructions stored in the memory, the memory comprising:
an Artificial Intelligence (AI)/Machine Learning (ML) module configured to create a unique identifier (ID) for the newly onboard livestock in such a manner that there exists a singularity between the unique identifier and the corresponding newly onboard livestock.

7. The client computing device of claim 6, wherein the memory further comprises a livestock registration module configured to use an image/video capturing device to capture a plurality of images/videos of the newly onboard livestock, wherein the AI/ML module is further configured to dynamically extract one or more features associated with the newly onboard livestock from the plurality of images/videos of the newly onboard livestock, and wherein the one or more features comprises data corresponding to a biometric data, a muzzle print, and/or at least one body part of the newly onboard livestock.

8. The client computing device of claim 7, wherein the AI/ML module is further configured to select one or more images/videos based on similarity of images/videos amongst the plurality of images/videos of the newly onboard livestock, wherein the AI/ML module is further configured to compute a similarity score for each of the plurality of images/videos of the newly onboard livestock with respect to each other, and wherein the AI/ML module is further configured to perform a de-duplication process on the selected images/videos of the newly onboard livestock to determine a unique image/video associated with the newly onboard livestock.

9. The client computing device of claim 6, wherein the AI/ML module is further configured to generate and use a patch/combination of a unique biometric-based ID and a unique body-based ID of the newly onboard livestock to create the unique ID for the newly onboard livestock, or wherein the AI/ML module is further configured to map the unique ID of the newly onboard livestock to a unique image/video and a demographic data of the newly onboard livestock, or wherein the livestock registration module is further configured to trigger encryption of the unique ID of the newly onboard livestock, or wherein the AI/ML module is further configured to use an AI model to analyse the creation of the unique ID of the newly onboard livestock.

10. The client computing device of claim 7, wherein the AI/ML module is further configured to perform a de-duplication process on the plurality of images/videos based on a comparison of the one or more features of the newly onboard livestock with one or more features of pre-existing livestock,
wherein the AI/ML module is further configured to:
trigger a recapture of the plurality of images/videos of the newly onboard livestock from a different elevation angle and/or a different viewpoint if a positive match is found between the one or more features of the newly onboard livestock and the one or more features of pre-existing livestock; and
perform the de-duplication process after every instance of recapture,
wherein the AI/ML module is further configured to trigger an update of an existing unique ID with the recaptured plurality of images/videos if a positive match is again found between the one or more features of the newly onboard livestock and the one or more features of pre-existing livestock,
wherein the AI/ML module is further configured to generate and store the unique ID in a database if a match is not found between the one or more features of the newly onboard livestock and the one or more features of pre-existing livestock,
wherein the AI/ML module is further configured to iteratively perform the de-duplication process on the plurality of images/videos, and
wherein the AI/ML module is further configured to:
select one or more images/videos from the plurality of images/videos; and
perform the de-duplication process in an iterative manner on the selected one
or more images/videos.

11. A server computing device for registration of a newly onboard livestock, the server computing device comprising:
a processor coupled to a memory and configured to execute one or more instructions stored in the memory, the memory comprising:
an Artificial Intelligence (AI)/Machine Learning (ML) engine configured to:
extract one or more features, from a plurality of images/videos, associated with the newly onboard livestock; and
create a unique identifier (ID) for the newly onboard livestock based on the one or more features in such a manner that there exists a singularity between the unique identifier and the corresponding newly onboard livestock.

12. The server computing device of claim 11, wherein the memory further comprises a registration module configured to receive the plurality of images/videos of the newly onboard livestock from a client computing device, and wherein the one or more features comprises data corresponding to a biometric data, a muzzle print, and/or at least one body part of the newly onboard livestock.

13. The server computing device of claim 12, wherein the AI/ML engine is further configured to select one or more images/videos based on similarity of images/videos amongst the plurality of images/videos of the newly onboard livestock, wherein the AI/ML engine is further configured to compute a similarity score for each of the plurality of images/videos of the newly onboard livestock with respect to each other, and wherein the AI/ML engine is further configured to trigger a de-duplication process on the selected images/videos of the newly onboard livestock to determine a unique image/video associated with the newly onboard livestock.

14. The server computing device of claim 11, wherein the AI/ML engine is further configured to generate and use a patch/combination of a unique biometric-based ID and a unique body-based ID of the newly onboard livestock to create the unique ID for the newly onboard livestock, or wherein the AI/ML engine is further configured to map the unique ID of the newly onboard livestock to a unique image/video and demographic data of the newly onboard livestock, or wherein the AI/ML engine is further configured to perform encryption of the unique ID of the newly onboard livestock.

15. The server computing device of claim 12, wherein the AI/ML engine is further configured to trigger a de-duplication process on the plurality of images/videos based on a comparison of the one or more features of the newly onboard livestock with one or more features of pre-existing livestock,
wherein the AI/ML engine is further configured to:
trigger a recapture of the plurality of images/videos of the newly onboard livestock from a different elevation angle and/or a different viewpoint if a positive match is found between the one or more features of the newly onboard livestock and the one or more features of pre-existing livestock; and
trigger the de-duplication process after every instance of recapture,
wherein the AI/ML engine is further configured to update an existing unique ID with the recaptured plurality of images/videos if a positive match is again found between the one or more features of the newly onboard livestock with the one or more features of pre-existing livestock,
wherein the AI/ML engine is further configured to generate and store the unique ID in a database if a positive match is not found between the one or more features of the newly onboard livestock with the one or more features of pre-existing livestock,
wherein the AI/ML module is further configured to iteratively perform the de-duplication process on the plurality of images/videos, and
wherein the AI/ML module is further configured to:
select one or more images/videos from the plurality of images/videos; and
perform the de-duplication process in an iterative manner on the selected one
or more images/videos.
